# EUROPEAN PATENT SPECIFICATION

(11) **EP 1 519 545 B1**
(45) Date of publication and mention of the grant of the patent: **11.08.2010**
(21) Application number: 04023195.3
(22) Date of filing: 29.09.2004
(51) Int. Cl.: H04M 1/02

(54) **Folder type mobile terminal using organic electroluminescent panel and display method thereof**
Klappbares Mobilkommunikationsgerät mit einer organischen elektrolumineszenten Anzeigevorrichtung und Anzeigeverfahren dafür
Téléphone sans fil de type pliable muni d'un écran électroluminescent organique et procédé d'affichage associé

(30) Priority: 29.09.2003 KR 2003067506
(43) Date of publication of application: 30.03.2005
(73) Proprietor: LG Display Co., Ltd., Youngdungpo-gu, Seoul (KR)
(72) Inventor: Kim, Hak Su, Gangbuk-gu, Seoul (KR)
(74) Representative: TER MEER - STEINMEISTER & PARTNER GbR

(56) References cited:
- GB-A- 2 349 784
- US-A- 5 896 575
- US-A1- 2002 158 999
- US-A1- 2002 191 135
- US-A1- 2003 171 060
- US-A1- 2003 227 254

## Description

The present invention relates to a mobile terminal and display method thereof, and more particularly, to a folder type mobile terminal using an organic electroluminescent panel and display method thereof, by which lights are emitted in both directions of upper and lower substrates of the organic electroluminescent panel.

Recently, various kinds of folder type mobile phones are marketed. In the folder type mobile phones, liquid crystal displays differing in size are mostly assembled to an inside and outside of a display panel, respectively.

Namely, when the liquid crystal displays are used for the general folder type mobile phone, a size of one LCD panel provided to the inside of the folder is greater than that of the other LCD panel provided to the outside of the folder.

Moreover, the LCD panel can be replaced by an organic EL (electroluminescent) panel as the display panel.

An organic EL device emits light in a following manner. First of all, electrons and holes are injected into a light-emitting layer from an electron injection electrode (cathode) and a hole injection electrode (anode), respectively so that the electrons and holes are coupled to each other to produce excitons. The excitons then fall down to a base state from an excited state to emit the light.

The organic EL device is more advantageous than the passive light-emitting device needing a separate light source such as LCD in that its response speed is as fast as that of a cathode ray tube (CRT).

And, the organic EL device has a low DC drive voltage and can be implemented into an ultra-slim size, thereby being applicable to a portable device.

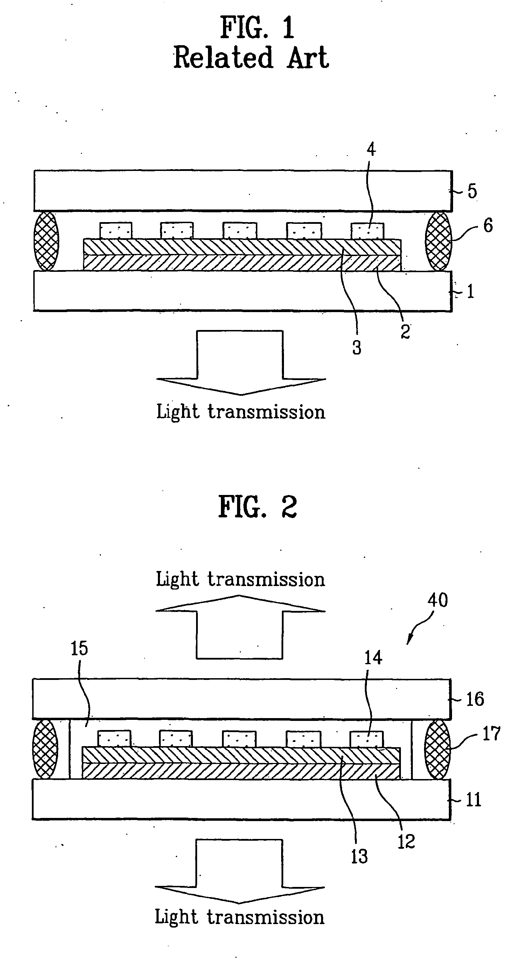

FIG. 1 is a cross-sectional diagram of an organic EL panel according to a related art.

Referring to FIG. 1, a first electrode 2 is formed on a transparent substrate 1 by patterning a transparent material of ITO (indium tin oxide) by etching.

An organic luminescent layer 3 is formed on the first electrode 2. And, a second electrode 4 is formed of metal on the organic luminescent layer 3.

After substrate 5 formed of metal has been deposited over the above-explained structure, the substrates 5 and 1 are sealed using a sealant 6. In the configuration of the organic EL device according to the related art, light is emitted from the organic luminescent layer through the transparent substrate 1 only.

Since the related art folder type mobile terminal using the LCD or organic EL panel needs two kinds of display panels differing in size, the display panels should be separately controlled.

However, the number of parts for controlling the two kinds of the display panels increases twice, thereby degrading the competitiveness of the mobile phone in product cost.

US 2002/158999 A1 describes an electronic apparatus with a liquid crystal display (LCD) such as a folding cellular phone, by which display contents on the LCD is viewable even when the apparatus is closed. The mobile comprises a display unit housing and an operation unit housing. The display unit housing is fitted with a transmissive LCD, both sides of which are viewable, and the operation unit housing has input keys. Display control means control the LCD to display reversed display contents if necessary depending on whether a user views the front side of the LCD or its backside.

US 2003/171060 A1 describes an organic electroluminescence device having an anode structure on the lower surface which is effective for taking out light efficiently from the cathode on the upper surface in which the organic electroluminescence device comprises an anode, a cathode and an organic layer put between both of them. The organic layer contains an organic light emitting layer that emits light by re-combination of holes supplied from the cathode A and electrons supplied from the cathode. The cathode comprises a laminate structure of an electron injecting metal layer, and a transparent conductive layer ultra thin film which is basically light permeable. The anode contains a metal belonging to the group V or group VI of the periodical table to at least a portion in contact with the organic layer and is basically light reflective.

US 2002/191135 A1 describes a LCD device and a mobile telecommunication terminal using the same, which can display information even when a folding cover is not open by using a double-faced liquid crystal display device. The double-faced liquid crystal display device includes a first substrate having a common electrode, a second substrate having n scan electrodes and m signal electrodes, a liquid crystal layer disposed between the first and second substrates, a polarizer, and a reflector, wherein the liquid crystal display device is divided into a first region and a second region, and the polarizer and the reflector are symmetrically disposed so that the first region is displayed in a first direction and the second region is displayed in a second direction.

Accordingly, the present invention is directed to a folder type mobile terminal and display method thereof that substantially obviates one or more problems due to limitations and disadvantages of the related art.

An object of the present invention is to provide a dual folder type mobile terminal and display method, by which images can be displayed using one organic EL panel enabling to bi-directionally transmit light through upper and lower substrates.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The object is solved by the features of the independent claims.

Preferably, the upper and lower substrates are transparent.

Preferably, the organic EL panel further includes a first electrode formed of ITO (indium tin oxide).

Preferably, the organic EL panel further includes a second electrode formed of a transparent metal-based material.

Preferably, if the folder is in the open state, the drive unit drives an entire area of the organic EL panel by scanning the entire area of the organic EL panel and then applying data to scanned pixels, and if the folder is in the closed state, the drive unit drives a partial area of the organic EL panel by scanning the partial area of the organic EL panel and then applying data to partially scanned pixels.

More preferably, if the folder is in the closed state, the drive unit applies a portion of the data displayed in case of the open state of the folder to the partially scanned pixels.

More preferably, the drive unit drives an alignment direction of the data displayed in case of the closed state of the folder to be reverse to a display direction of the data displayed in case of the open sate of the folder.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a cross-sectional diagram of an organic EL panel according to a related art;
FIG. 2 is a cross-sectional diagram of an organic EL panel of a folder type mobile terminal according to the present invention;
FIG. 3 is a block diagram of a folder type mobile terminal using an organic EL panel according to the present invention;
FIG. 4 is a layout of an open folder of a folder type mobile terminal according to the present invention;
FIG. 5 is a layout of a closed folder of a folder type mobile terminal according to the present invention; and
FIG. 6 is a flowchart of a display method of a folder type mobile terminal using an organic EL panel according to the present invention.

Reference will now be made in detail to the preferred embodiments of the present invention, examples of which are illustrated in the accompanying drawings. Wherever possible, the same reference numbers will be used throughout the drawings to refer to the same or like parts.

FIG. 2 is a cross-sectional diagram of an organic EL panel of a folder type mobile terminal according to the present invention.

Referring to FIG. 2, an organic EL panel 40 includes a first electrode 12 formed on a lower transparent substrate 11 by patterning a transparent material of ITO (indium tin oxide) by etching, a second electrode 14 formed of metal patterned to cross with the first electrode 12, an organic luminescent layer 13 deposited on a pixel area defmed on an intersection between the first and second electrodes 12 and 14 to emit light by a voltage applied between the first and second electrodes 12 and 14, an inorganic layer 15 formed to protect both of the organic luminescent layer 13 and the second electrode 14, an upper transparent substrate 16 formed on the inorganic layer 15, and a sealant 17 attaching the upper and lower transparent substrates 16 and 11 to each other.

The first and second electrode 12 and 14 inject holes and electrons into the organic luminescent layer 13, respectively.

As the upper and lower substrates 16 and 11 and the second electrode 14 are transparent, light can be bi-directionally transmitted through the upper and lower transparent substrates 16 and 11 of the organic EL panel 40.

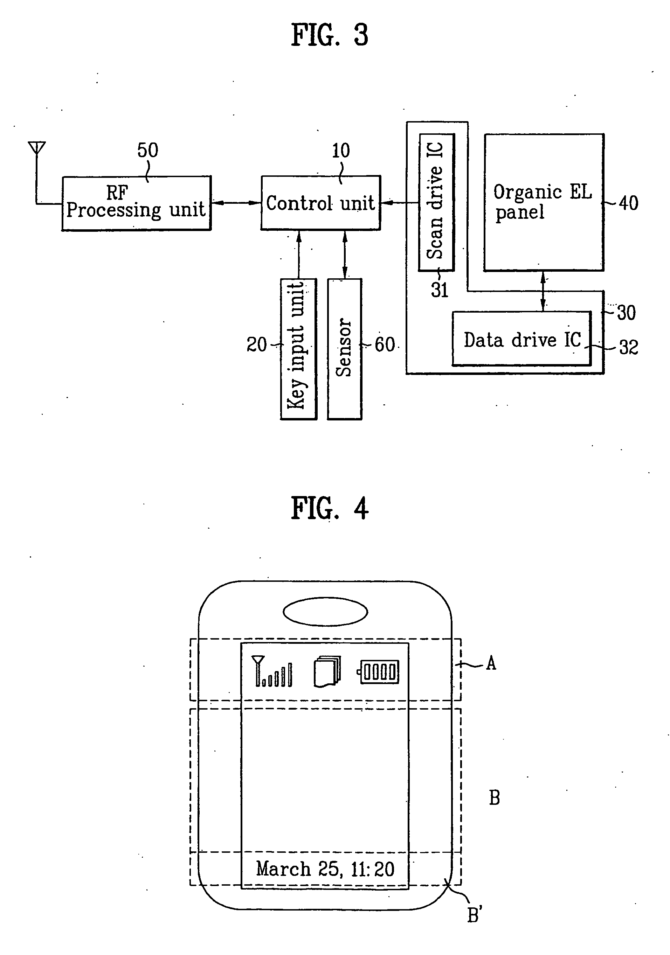

FIG. 3 is a block diagram of a folder type mobile terminal using the organic EL panel 40 according to the present invention.

Referring to FIG. 3, a folder type mobile terminal includes a control unit 10, a key input unit 20, a drive unit 30, an organic EL panel 40, an RF processing unit 50, and a sensor 60.

The RF unit 50 modulates a voice signal inputted from a user into a radio signal to output to an antenna and demodulates to output a radio signal received via the antenna.

The organic EL panel 40, as explained in FIG. 2, includes the transparent upper and lower substrates 16 and 11 and the second electrode 14 formed of the transparent metal. Hence, light can be emitted from the organic luminescent layer 13 formed on the pixel area to be bi-directionally transmitted through both of the upper and lower substrates 16 and 11.

After having decided an open or closed state of a folder of the mobile terminal, the sensor 60 outputs a sensed signal to the control unit 10.

The control unit 10 controls an overall operation of the mobile terminal. The control unit 10 receives the sensed signal from the sensor 60 and then outputs a control signal for driving a display of the organic EL panel 40.

The drive unit 30 receives the control signal for driving the organic EL panel 40 from the control unit 10 and then drives the organic EL panel 40 to display data of an operational status of the mobile terminal, dialing, and the like appropriately thereon.

The drive unit 30 includes a scan drive IC 31 applying a scan signal for turning on each pixel of the organic EL panel 40 and a data drive IC 32 applying data to the corresponding pixel turned on by the scan drive IC 31.

And, the key input unit 20 includes a plurality of number keys for dialing or input and a plurality of function keys for performing specific functions.

Meanwhile, an operation of the folder type mobile terminal is explained in detail as follows.

First of all, after having decided an open or closed state of the folder, the sensor 60 outputs the corresponding sensed signal to the control unit 10.

After having received the sensed signal, the control unit 10 displays data using the organic EL panel 40 entirely if the folder is in the open state or sends the control signal to the drive unit 30 to display the data using the organic EL panel 40 in part if the folder is in the closed state.

Namely, once receiving the control signal indicating that the folder is in the open state, the drive unit 30 drives the entire portions of the organic panel 40 by having the scan drive IC 31 scan the entire portions of the organic EL panel 40 in a forward direction and by having the data drive IC 32 apply data to the scanned pixels.

On the other hand, once receiving the control signal indicating that the folder is in the closed state, the drive unit 30 partially drives the organic panel 40 by having the scan drive IC 31 scan some portions of the organic EL panel 40 and by having the data drive IC 32 apply data to the scanned pixels.

In doing so, when the folder is closed, the drive unit 30 applies a portion of the data displayed on the organic EL panel with the open folder to the partially scanned pixels.

And, by the drive unit 30, an alignment direction of the data displayed on an outside folder is made reverse to a display direction of the data appearing on an inside folder when the folder is open.

Thus, the folder type mobile terminal according to the present invention enables to display data on both sides of one organic EL panel 40 without using separate display devices on the inside and outside of the folder.

In doing so, data is displayed by entirely utilizing the organic EL panel 40 for the inside of the folder or by partially utilizing the organic EL panel 40 for the outside of the folder, whereby overall power consumption of the organic EL panel 40 can be minimized.

FIG. 4 is a layout of an open folder of a folder type mobile terminal according to the present invention.

Referring to FIG. 4, a display area appearing on the organic EL panel 40 can be divided into an icon part 'A' and a data part 'B' for convenience of description.

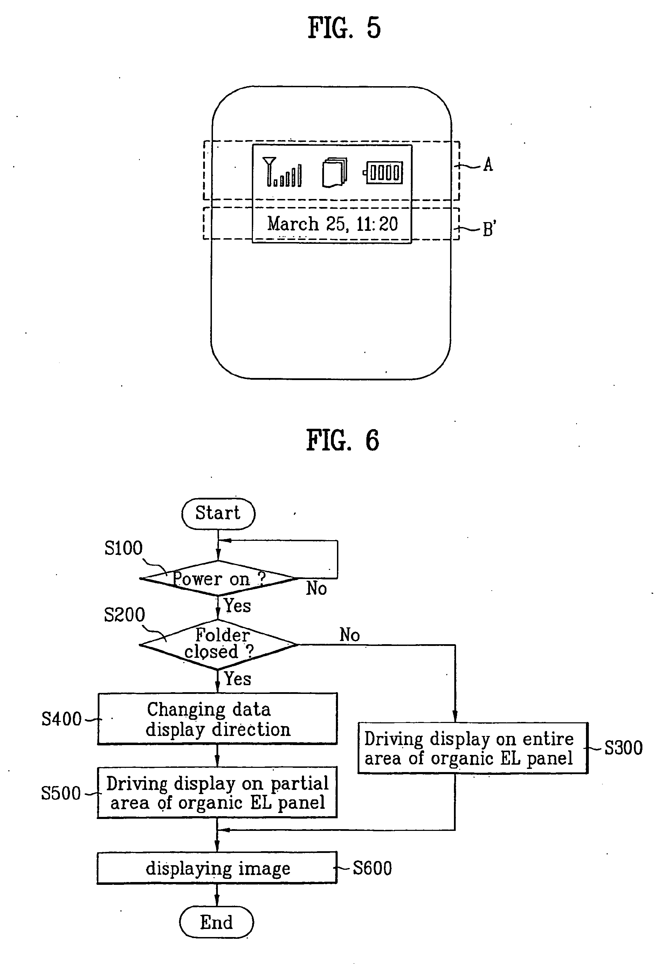

FIG. 5 is a layout of a closed folder of a folder type mobile terminal according to the present invention.

Referring to FIG. 5, if the folder is in the closed state, the drive unit 30 scans a portion of the organic EL panel 40 corresponding to a specific row to be displayed and changes a direction of the displayed data to display a specific image.

Once receiving the sensed signal indicating that the folder is in the closed state, the control unit 10 sends a drive control signal to enable the drive unit 30 to display the data on a partial area of the organic EL panel 40.

Namely, the scan drive IC 31 of the drive unit 30 scans the partial area of the organic EL panel 40 to display the data thereon. The data drive IC 32 changes the alignment direction of a portion of the data that will displayed in case of the open state of the folder and then applies the data to the partially scanned pixels.

Thus, the icon part A and a portion B' of the data part B, as shown in the drawing, of the image displayed in case of the open state of the folder are displayed.

FIG. 6 is a flowchart of a display method of a folder type mobile terminal using an organic EL panel according to the present invention.

Referring to FIG. 6, the sensor 60 decides whether the power of the mobile terminal is turned on or off (S100).

If the power is turned on, the sensor 60 senses the open or closed state of the folder of the mobile terminal and then sends a corresponding signal to the control unit 10 (S200).

If the folder is open, the control unit 10 controls the drive unit 30 so that an image can be displayed on an entire area of the organic EL panel 40.

Namely, once receiving the control signal indicating that the folder is in the open state from the control unit 10, the drive unit 30 drives the entire parts of the organic EL panel 40 by having the scan drive IC 31 scan the entire parts of the organic EL panel 40 in a forward direction and by having the data drive IC 32 apply the data to the scanned pixels (S300).

On the other hand, if the folder is closed, the control unit 10 controls the drive unit 30 so that the image can be displayed on the partial area of the organic EL panel 40.

Namely, once receiving the control signal indicating that the folder is in the closed state, the drive unit 30 changes the display direction of the data into a direction reverse to the data display direction of the inside of the folder (S400).

And, the partial area of the organic EL panel 40 is driven by having the scan drive IC 31 scan the partial area of the organic EL panel 40 and by having the data drive IC 32 apply the data to the scanned pixels (S500).

Then, the organic EL panel 40 enables to display the corresponding image according to the drive signal of the drive unit 30.

Accordingly, the folder type mobile terminal according to the present invention brings about the following effects or advantages.

First of all, the first and second electrodes of the organic EL panel are formed of transparent metal as well as the sealed upper and lower substrates are formed of the transparent material. Hence, the present invention enables bilateral image displays through both sides of one organic EL panel, thereby reducing the product cost of the mobile terminal.

Secondly, the image can be displayed on the entire area of the organic EL panel in case of the open state of the folder or on the partial area of the organic EL panel in case of the closed state of the folder, whereby the present invention enables to reduce the power consumption thereof.

Summarized, the present invention provides a dual folder type mobile terminal and display method, by which images can be displayed using one organic EL panel enabling to bi-directionally transmit light through upper and lower substrates. The present invention includes an RF unit modulating a voice signal inputted from a user into a radio signal, the RF unit demodulating to output an antenna-received radio signal, an organic EL panel displaying an image, the organic EL panel including a lower substrate, an upper substrate on the lower substrate, and an organic luminescent layer between the lower and upper substrates to emit light bi-directionally transmitted through the lower and upper substrates, a sensor detecting an open or closed state of a folder of the mobile terminal to output a sensed signal, a control unit outputting a drive control signal for driving the organic EL panel according to the sensed signal received from the sensor, a drive unit receiving the drive control signal from the control unit to drive the organic EL panel, and a key input unit having a plurality of number keys for dialing and a plurality of function keys for performing specific functions respectively. Moreover, the invention may be applied to more general foldable mobile devices of other types having elements such as the antenna, RF unit or key input unit omitted.

It will be apparent to those skilled in the art that various modifications and variations can be made in the present invention. Thus, it is intended that the present invention covers the modifications and variations of this invention provided they come within the scope of the appended claims.

## Claims

1. A folder type mobile terminal comprising:
an RF unit (50) modulating a voice signal inputted from a user into a radio signal, the RF unit (50) demodulating to output an antenna-received radio signal;
an organic EL panel (40) displaying an image, the organic EL panel (40) comprising:
a lower substrate (11);
an upper substrate (16) on the lower substrate; and
an organic luminescent layer (13) between the lower and upper substrates (11, 16) to emit light bi-directionally transmitted through the lower and upper substrates (11, 16);
a sensor (60) detecting an open or closed state of a folder of the mobile terminal to output a sensed signal;
a control unit (10) outputting a drive control signal for driving the organic EL panel (40) according to the sensed signal received from the sensor (60);
a drive unit (30) receiving the drive control signal from the control unit (10) to drive the organic EL panel (40); and
a key input unit (20) having a plurality of number keys for dialing and a plurality of function keys for performing specific functions respectively,
wherein,
the drive unit (30) is adapted to drive, if the folder is in open state, an entire area of the organic EL panel (40) by scanning the entire area of the organic EL panel and then applying data to scanned pixels, wherein if the folder is in closed state, the drive unit (30) is adapted to drive a partial area of the organic EL panel by scanning the partial area of the organic EL panel (40) and to then apply partial of the data applied in case of the open state of the folder to partially scanned pixels,
wherein the drive unit (30) is adapted to drive an alignment direction of the data displayed in case of the closed state of the folder to be reverse to a display direction of the data displayed in case of the open state of the folder.

2. The folder type mobile terminal of claim 1, wherein the upper and lower substrates (12, 16) are transparent.

3. The folder type mobile terminal of claim 1, wherein the organic EL panel (40) further comprises a first electrode (11) formed of ITO (indium tin oxide).

4. The folder type mobile terminal of claim 1, wherein the organic EL panel (40) further comprises a second electrode (14) formed of a transparent metal-based material.

5. In a mobile terminal having an RF unit (50) modulating a voice signal inputted from a user into a radio signal, the RF unit (50) demodulating to output an antenna-received radio signal, a display method of a folder type mobile terminal, comprising the steps of:
outputting a sensed signal by deciding an open or closed state of a folder of the folder type mobile terminal;
outputting a drive control signal for driving an organic EL panel (40) displaying an image by emitting light bi-directionally through upper and lower substrates (11, 16) according to the sensed signal;
driving the organic EL panel (40) according to the drive control signal; and
displaying the image on the organic EL panel (40) according to the drive control signal,
wherein if the folder is in open state, a drive unit (30) drives an entire area of the organic EL panel (40) by scanning the entire area of the organic EL panel and then applying data to scanned pixels, wherein if the folder is in closed state, the drive unit (30) drives a partial area of the organic EL panel by scanning the partial area of the organic EL panel (40) and then applying a partial of the data applied in case of the open state of the folder to partially scanned pixels,
wherein the drive unit (30) changes an alignment direction of the data displayed in case of the closed state of the folder to be reverse to a display direction of the data displayed in case of the open state of the folder.

6. The display method of claim 5, wherein the upper and lower substrates (11, 16) are formed of a transparent material.

7. The display method of claim 5, wherein the organic EL panel (40) comprises a first electrode (12) formed of ITO (indium tin oxide).

8. The display method of claim 5, wherein the organic EL panel (40) comprises a second electrode (14) formed of a transparent metal-based material.

## Patentansprüche

1. Klappbares Mobilfunkendgerät, umfassend:
- eine RF-Einheit (50), die ein von einem Benutzer eingegebenes Sprachsignal in ein Funksignal moduliert, wobei die RF-Einheit (50) demoduliert, um ein von einer Antenne empfangenes Funksignal auszugeben;
- eine organische EL-Tafel (40), die ein Bild anzeigt, wobei die organische EL-Tafel (40) umfasst:
- ein unteres Substrat (11);
- ein oberes Substrat (16) auf dem unteren Substrat (11); und
- eine organische Lumineszenzschicht (13) zwischen dem oberen und unteren Substrat (11, 16), um Licht zu emittieren, das bidirektional durch das obere und untere Substrat (11, 16) transmittiert wird;
- einen Sensor (60), der einen offenen oder geschlossenen Zustand einer Klappe des Mobilfunkendgeräts ermittelt, um ein Messsignal auszugeben;
- eine Steuereinheit (10), die ein Treibersteuersignal zum Ansteuern der organischen EL-Tafel (40) entsprechend dem vom Sensor (60) empfangenen Messsignal ausgibt;
- eine Treibereinheit (30), die das Treibersteuersignal von der Steuereinheit (10) empfängt, um die organische El-Tafel (40) anzusteuern; und
- eine Tastatureingabeeinheit (20) mit einer Vielzahl von Nummerntasten zum Wählen und einer Vielzahl von Funktionstasten jeweils zum Durchführen spezieller Funktionen,
wobei die Treibereinheit (30) dazu geeignet ist, eine gesamte Fläche der organischen EL-Tafel (40) anzusteuern, wenn die Klappe im offenen Zustand ist, indem die gesamte Fläche der organischen EL-Tafel gescannt wird und dann Daten an gescannte Pixel angelegt werden, wobei die Treibereinheit (30) dazu geeignet ist, eine Teilfläche der organischen EL-Tafel anzusteuern, wenn die Klappe im geschlossenen Zustand ist, indem die Teilfläche der organischen EL-Tafel (40) gescannt wird, und dann an teilweise gescannte Pixel einen Teil der Daten anzulegen, die im Fall des offenen Zustands der Klappe angelegt werden,
wobei die Treibereinheit (30) dazu geeignet ist, eine Ausrichtungsrichtung der Daten, die im Fall des geschlossenen Zustands der Klappe angezeigt werden, so anzusteuern, dass sie entgegengesetzt zu einer Anzeigerichtung der Daten ist, die im Fall des offenen Zustands der Klappe angezeigt werden.

2. Klappbares Mobilfunkendgerät nach Anspruch 1, wobei das obere und untere Substrat (11, 16) transparent sind.

3. Klappbares Mobilfunkendgerät nach Anspruch 1, wobei die organische EL-Tafel (40) ferner eine erste Elektrode (11) aus ITO (Indium-Zinn-Oxid) umfasst.

4. Klappbares Mobilfunkendgerät nach Anspruch 1, wobei die organische EL-Tafel (40) ferner eine zweite Elektrode (14) aus einem transparenten Metall-basierten Material umfasst.

5. Ein Anzeigeverfahren eines klappbaren Mobilfunkendgeräts in einem Mobilfunkendgerät mit einer RF-Einheit (50), die ein von einem Benutzer eingegebenes Sprachsignal in ein Funksignal moduliert, wobei die RF-Einheit (50) demoduliert, um ein von einer Antenne empfangenes Funksignal auszugeben, umfasst folgende Schritte:
- Ausgeben eines Messsignals durch Bestimmen eines offenen oder geschlossenen Zustands einer Klappe des klappbaren Mobilfunkendgeräts;
- Ausgeben eines Treibersteuersignals zum Ansteuern einer organischen EL-Tafel (40), die ein Bild gemäß dem Messsignal durch bidirektionales Emittieren von Licht durch ein oberes und unteres Substrat (11, 16) anzeigt;
- Ansteuern der organischen EL-Tafel (40) gemäß dem Treibersteuersignal; und
- Anzeigen des Bildes auf der organischen EL-Tafel (40) gemäß dem Treibersteuersignal;
wobei eine Treibereinheit (30) eine gesamte Fläche der organischen EL-Tafel (40) ansteuert, wenn die Klappe im offenen Zustand ist, indem die gesamte Fläche der organischen EL-Tafel (40) gescannt wird und dann Daten an gescannte Pixel angelegt werden, wobei die Treibereinheit (30) eine Teilfläche der organischen EL-Tafel (40) ansteuert, wenn die Klappe im geschlossenen Zustand ist, indem die Teilfläche der organischen EL-Tafel (40) gescannt wird und dann ein Teil der Daten, die im Fall des offenen Zustands der Klappe angelegt werden, an teilweise gescannte Pixel angelegt wird,
wobei die Treibereinheit (30) eine Ausrichtungsrichtung der Daten, die im Fall des geschlossenen Zustands der Klappe angezeigt werden, so ändert, dass sie entgegengesetzt zu einer Anzeigerichtung der Daten ist, die im Fall des offenen Zustands der Klappe angezeigt werden.

6. Anzeigeverfahren nach Anspruch 5, wobei das obere und untere Substrat (11, 16) aus einem transparenten Material hergestellt sind.

7. Anzeigeverfahren nach Anspruch 5, wobei die organische EL-Tafel (40) eine erste Elektrode (12) aus ITO (Indium-Zinn-Oxid) umfasst.

8. Anzeigeverfahren nach Anspruch 5, wobei die organische EL-Tafel eine zweite Elektrode (14) aus einem transparenten Metall-basierten Material umfasst.

## Revendications

1. Terminal téléphonique mobile de type pliable, comprenant :
une unité RF (50) qui module un signal vocal entré depuis un utilisateur pour former un signal radio, l'unité RF (50) assurant une démodulation pour délivrer un signal radio reçu par une antenne ;
un panneau organique EL (40) affichant une image, le panneau organique EL (40) comprenant :
un substrat inférieur (11) ;
un substrat supérieur (16) sur le substrat inférieur ; et
une couche luminescente organique (13) entre le substrat inférieur et le substrat supérieur (11, 16) pour émettre une lumière transmise de façon bidirectionnelle à travers le substrat inférieur et le substrat supérieur (11, 16) ;
un capteur (60) détectant un état ouvert ou fermé d'une partie pliable du terminal mobile pour délivrer un signal de capteur ;
une unité de commande (10) qui délivre un signal de commande de pilotage pour piloter le panneau organique EL (14) en accord avec le signal de capteur reçu depuis le capteur (60) ;
une unité de pilotage (30) qui reçoit le signal de commande de pilotage depuis l'unité de commande (10) pour piloter le panneau organique EL (40) ; et
une unité de saisie à touches (20) ayant une pluralité de touches numériques pour composer un numéro téléphonique et une pluralité de touches de fonction pour exécuter des fonctions spécifiques respectives,
dans lequel
l'unité de pilotage (30) est adaptée pour piloter, si la partie pliable est dans l'état ouvert, une superficie entière du panneau organique EL (40) en balayant la superficie entière du panneau organique EL et en appliquant des données aux pixels balayés, et si la partie pliable est dans l'état fermé, l'unité de pilotage (30) est adaptée pour piloter une superficie partielle du panneau organique EL en balayant la superficie partielle du panneau organique EL (40) et en appliquant une partie des données appliquées dans le cas où la partie pliable est dans l'état ouvert à des pixels partiellement balayés,
dans lequel l'unité de pilotage (30) est adaptée pour piloter une direction d'alignement des données affichées dans le cas où la partie pliable est dans l'état fermé en sens inverse à une direction d'affichage des données affichées dans le cas où la partie pliable est dans l'état ouvert.

2. Terminal téléphonique mobile de type pliable selon la revendication 1, dans lequel le substrat supérieur et le substrat inférieur (12, 16) sont transparents.

3. Terminal téléphonique mobile de type pliable selon la revendication 1, dans lequel le panneau organique EL (40) comprend en outre une première électrode (11) formée en ITO (oxyde indium-étain).

4. Terminal téléphonique mobile de type pliable selon la revendication 1, dans lequel le panneau organique EL (40) comprend en outre une seconde électrode (14) formée d'un matériau transparent à base de métal.

5. Procédé d'affichage dans un terminal téléphonique mobile de type pliable, le terminal téléphonique comprenant une unité RF (50) qui module un signal vocal entré depuis un utilisateur pour former un signal radio, l'unité RF (50) assurant une démodulation pour délivrer un signal radio reçu par une antenne, ledit procédé comprenant les étapes consistant à :
délivrer un signal détecté en décidant quant à un état ouvert ou fermé d'une partie pliable du terminal téléphonique mobile du type pliable ;
délivrer un signal de commande de pilotage pour piloter un panneau organique EL (40) qui affiche une image en émettant de la lumière de manière bidirectionnelle à travers un substrat supérieur et un substrat inférieur (11, 16) en accord avec le signal détecté ;
piloter le panneau organique EL (40) en accord avec le signal de commande de pilotage ; et
afficher l'image sur le panneau organique EL en accord avec le signal de commande de pilotage,
dans lequel, si la partie pliable est dans un état ouvert, une unité de pilotage (30) pilote une superficie entière du panneau organique EL en balayant la superficie entière du panneau organique EL et en appliquant des données aux pixels balayés, et si la partie pliable est dans l'état fermé, l'unité de pilotage (30) pilote une superficie partielle du panneau organique EL en balayant la superficie partielle du panneau organique EL (40) et en appliquant une partie des données appliquées dans le cas où la partie pliable est dans l'état ouvert à des pixels partiellement balayés,
dans lequel l'unité de pilotage (30) change une direction d'alignement des données affichées dans le cas où la partie pliable est dans l'état fermé pour être inverse à une direction d'affichage des données affichées dans le cas où la partie pliable est dans l'état ouvert.

6. Procédé d'affichage selon la revendication 5, dans lequel le substrat supérieur et le substrat inférieur (11, 16) sont formés en matériau transparent.

7. Procédé d'affichage selon la revendication 5, dans lequel le panneau organique EL (40) comprend une première électrode (12) formée en ITO (oxyde indium-étain).

8. Procédé d'affichage selon la revendication 5, dans lequel le panneau organique EL (40) comprend une seconde électrode (14) formée en un matériau transparent à base de métal.
